# EUROPÄISCHE PATENTSCHRIFT

(11) **EP 0 485 503 B1**
(45) Veröffentlichungstag und Bekanntmachung des Hinweises auf die Patenterteilung: **10.04.1996**
(21) Anmeldenummer: 90912688.0
(22) Anmeldetag: 23.07.1990
(51) Int. Cl.: A47L 13/51, B62B 3/10

(54) **GERÄTEWAGEN**
EQUIPMENT TROLLEY
CHARIOT D'EQUIPEMENT

(30) Priorität: 31.07.1989 DE 8909254 U
(43) Veröffentlichungstag der Anmeldung: 20.05.1992
(73) Patentinhaber: Floordress Reinigungsgeräte GmbH, D-73547 Lorch (DE)
(72) Erfinder: SCHUNTER, Roland, D-7073 Lorch-Waldhausen (DE)
(74) Vertreter: Wilk, Hans-Christof, Dr.
(86) Internationale Anmeldenummer: EP9001207
(87) Internationale Veröffentlichungsnummer: WO9101676

(56) Entgegenhaltungen:
- DE-U- 8 619 303
- DE-U- 8 810 659
- FR-A- 2 292 617
- FR-A- 2 614 255
- GB-A- 2 106 051
- US-A- 3 037 786
- US-A- 3 168 329

## Beschreibung

Die Neuerung betrifft einen Gerätewagen für Reinigungszwecke, bestehend aus einem mit Rädern versehenen Gestell, vertikalen mit dem Gestell verbundenen Stützen sowie horizontalen mit den Stützen verbundenen Rahmen, in welche Behälter einhängbar sind zur Aufnahme von Reinigungsgeräten.

Unter Reinigungsgeräten sind hierbei alle Hilfsmittel zu verstehen, die in Verbindung mit solchen Gerätewagen benutzt werden, das heißt pressen zum Auspressen z.B. nasser Reinigungslappen, Körbe, Abfallbehälter, Abfallsäcke, Besen oder andere Wischgeräte.

Ein Gerätewagen der gattungsgemäßen Art ist aus der DE-U-8 619 303 bekannt.

Aufgabe der Neuerung ist es, Gerätewagen der eingangs genannten Art konstruktiv einfacher als bisher zu gestalten und insbesondere auch vielseitiger auszubilden. Nach der Neuerung wird dies dadurch erreicht, daß die vertikalen Stützen zusammen mit wenigstens einem der Rahmen einteilig ausgebildet sind. Die Stützen und der Rahmen können hierbei aus einem einzigen Rohr gebogen sein. Nach einer bevorzugten Ausgestaltung der Neuerung ist an den Stützen ein weiterer Rahmen um eine vertikale Achse drehbar gehalten. Dieser weitere Rahmen, der oberhalb des erstgenannten Rahmens angeordnet ist, ist vorzugsweise mit einem im wesentlichen quer zur Rahmenebene verlaufenden Träger versehen, der in einer an den Stützen befestigten Lagerbüchse drehbar und vertikal abgestützt gelagert ist.

Die Lagerbüchse ist zweckmäßigerweise in ihrer oberen Stirnfläche in Winkelabständen von z.B. 90° mit Einkerbungen versehen, in die ein mit dem Träger verbundenes Teil einrastbar ist, wodurch der Träger und damit der mit ihm verbundene Rahmen in Umfangsrichtung in verschiedenen Stellungen arretierbar ist. Der Träger kann oberhalb seines unteren Endes mit einem Querstift versehen sein, der in die Einkerbungen einrasten kann. Nach einer anderen Ausführungsform ist der Träger oberhalb seines unteren Endes mit einem Bund versehen, der zwei diametral gegenüberliegende axiale Nasen aufweist, die in die entsprechend geformten Einkerbungen eingerastet werden können. Vorzugsweise ist in der Lagerbüchse eine Schraubenfeder eingebaut, durch welche der Träger vertikal beaufschlagbar und gegen seine Abstützung auf der oberen Stirnfläche der Lagerbüchse angedrückt wird.

Eine beispielsweise Ausführungsform der Neuerung wird nachstehend anhand der Zeichnung beschrieben, in der
- Figur 1: in Schrägansicht einen neuerungsgemäßen Gerätewagen zeigt.
- Figur 2: zeigt einen Gerätewagen nach Figur 1, wobei in den einen Rahmen ein wannenförmiger Behälter eingehängt ist, der zur Aufnahme von Reinigungsmitteln dient; ferner ist der obere Rahmen gegenüber der Position in Figur 1 um 90° geschwenkt dargestellt.
- Figur 3: zeigt im Schnitt eine Ausführungsform einer Lagerbüchse zur drehbaren Halterung und Abstützung des oberen Rahmens.
- Figur 4: zeigt die Lagerbüchse nach Figur 3 in Seitenansicht.
- Figur 5: zeigt teilweise im Schnitt eine weitere Ausführungsform der Lagerbüchse.
- Figur 6: zeigt die Lagerbüchse nach Figur 5 in Seitenansicht.

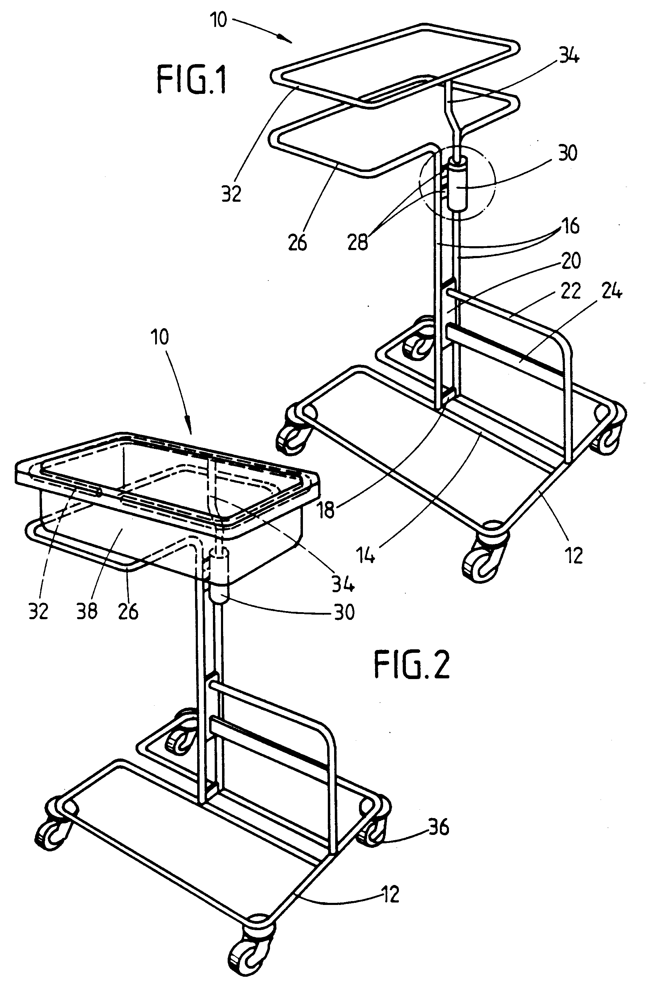

Figur 1 zeigt einen Gerätewagen 10 mit einem Gestell 12, an welchem Räder 36 befestigt sind. Das Gestell 12 ist, wie dargestellt, aus einem einzigen Rohr gebogen und geeignet verschweißt. In das Gestell 12 können geeignete, nicht gezeigte Böden oder Roste eingehängt werden. An zwei horizontalen Mittelstreben 14 des Gestells 12 sind, wie Figur 1 zeigt, zwei vertikale Stützen 16 befestigt, z.B. angeschweißt, die an ihren unteren Enden z.B. durch eine Lasche 18 verbunden sind.

Die Stützen 16 erstrecken sich aufwärts und beide sind dann rechtwinklig entgegengesetzt zueinander umgebogen unter Bildung eines horizontalen etwa rechteckigen Rahmens 26. Der in Gebrauchslage horizontale Rahmen 26 ist somit einteilig mit den beiden Stützen 16 ausgebildet und insbesondere sind Rahmen 26 und Stützen 16 aus einem einzigen Rohrstück gebogen. Im unteren Bereich der Stützen 16 aber oberhalb der Lasche 18 ist zwischen den Stützen 16 eine Halteplatte 20 angeordnet, die mit den Stützen verbunden ist, wodurch die letzteren zusätzlich versteift werden. An der Halteplatte 20 ist der waagerechte Schenkel eines rechtwinklig abgebogenen Bügels 22 befestigt, dessen senkrechter Schenkel an Gestell 12 befestigt ist. Die Verbindung zwischen Bügel 22 einerseits und Halteplatte 20 bzw. Gestell 12 andererseits kann zweckmäßigerweise durch Schweißen erfolgen. Der senkrechte Schenkel des Bügels 22 ist mit der Halteplatte 20 durch eine im wesentlichen horizontal verlaufende Schiene 24 verbunden.

Der Bügel 22 dient zum Einhängen einer nicht gezeigten Presse, mit der nasse Wischlappen oder Mops ausgepreßt werden. Die Schiene 24 bildet einen Anschlag für eine solche Presse. Oberhalb der Halteplatte 20 und kurz vor dem oberen Ende der vertikalen Stützen 16 sind die letzteren durch z.B. zwei Laschen 28 verbunden, die ihrerseits zur Befestigung einer Lagerbüchse 30 dienen.

Wie Figur 1 zeigt, ist oberhalb des Rahmens 26 im Abstand von diesem ein weiterer z.B. rechteckiger Rahmen 32 vorgesehen, der an einer seiner Seiten, z.B. einer Längsseite mit einem Träger 34 verbunden, z.B. verschweißt ist, welcher im wesentlichen rechtwinklig zur Ebene des Rahmens 36 verläuft. In der dargestellten Ausführungsform ist der Träger 34 etwas abgekröpft, dies ist aber nicht unbedingt erforderlich. Auch können der Träger 34 und der Rahmen 32 die beide zweckmäßigerweise aus Rohrmaterial bestehen, aus einem einzigen Rohr gebogen sein. Das untere Ende des Trägers 34 erstreckt sich in eine Lagerbüchse 30 hinein, die an den Laschen 28 z.B. angeschraubt ist und in der Lagerbüchse 30 ist der Rahmen 32 drehbar gelagert und vertikal abgestützt.

Wie Figur 2 zeigt, ist in den Rahmen 32 ein z.B. wannenförmiger Behälter eingehängt zur Aufnahme von Reinigungsmitteln oder Reinigungsgeräten. In den unteren Rahmen 26 kann beispielsweise ein Abfallsack eingehängt werden und der obere Rahmen 32 kann über die Öffnung des Abfallsackes geschwenkt werden, so daß die Öffnung des Abfallsackes z.B. durch den Boden des Behälters 38 nach Wunsch abgedeckt werden kann. Soll nun etwas in den Abfallsack hineingeworfen werden, so kann der obere Rahmen 32 gegenüber dem unteren Rahmen 26 verschwenkt werden, bis der Rahmen 26 bzw. die Öffnung des nicht gezeigten Abfallsackes, der in den Rahmen 26 eingehängt ist, freigegeben sind.

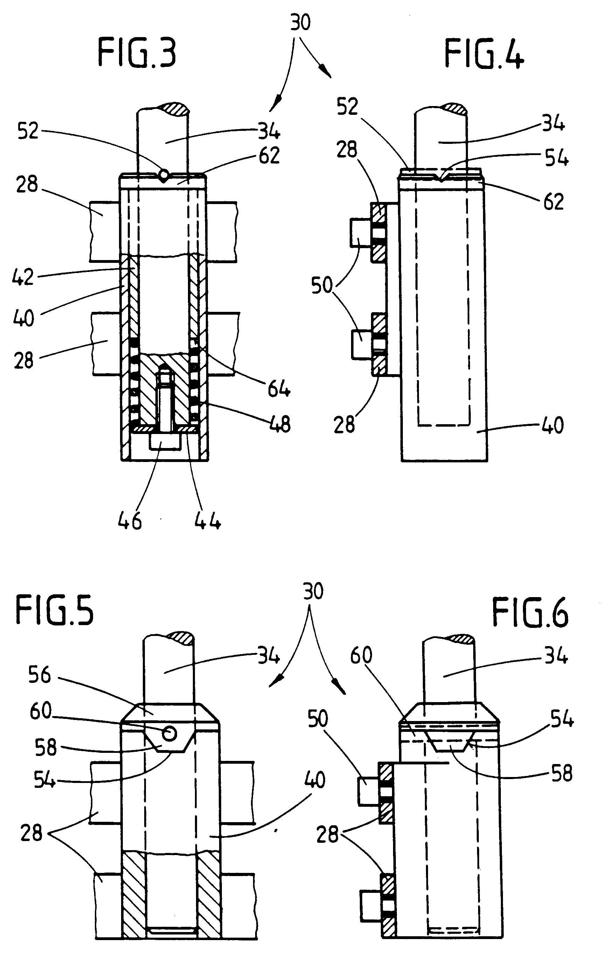

Die Lagerbüchse 30 besteht, wie insbesondere Figur 3 zeigt, aus einem zylindrischen Gehäuse oder Mantel 40, der mittels Schrauben 50 an den Laschen 28 angeschraubt ist. Der Mantel 40 ist an seinem oberen Ende durch einen Abdeckring 62 abgedeckt, der geeignet mit dem Mantel 40 verbunden ist. Der Abdeckring 62 kann aber auch nur lose auf die obere Stirnfläche des Mantels 40 aufgelegt sein, oder er kann auch ganz wegfallen. In der dargestellten Ausführungsform ist der Abdeckring 62 in seiner oberen Stirnfläche mit radial gerichteten Einkerbungen 54 versehen, und es sind jeweils zwei sich diametral gegenüberliegende Einkerbungen 54 vorgesehen, wobei diese Paare von Einkerbungen beispielsweise jeweils um 90° gegeneinander in Umfangsrichtung des Abdeckringes 62 versetzt sind. Selbstverständlich können auch andere Winkelabstände hierfür vorgesehen werden.

Der Träger 34 ist mit einem Querstift 52 versehen, der fest mit dem Träger 34 verbunden ist und radial auf beiden Seiten über den Träger 34 übersteht. Der Querstift 52 rastet, wie Figur 1 zeigt, in die Einkerbungen 54 ein, wodurch einerseits der Träger 34 und damit der mit ihm verbundene Rahmen 32 vertikal abgestützt werden und andererseits der Träger und der Rahmen in Umfangsrichtung in verschiedenen Positionen arretiert werden können. Wie Figur 3 weiter zeigt, ist der Mantel 40 an seiner Innenseite mit einer radialen Schulter 64 versehen, die beispielsweise durch eine in den Mantel 40 fest eingebaute Hülse 42 gebildet wird. Die Hülse 42 kann von oben in den Mantel 40 eingesetzt sein und ihre axiale Länge kann beispielsweise 2/3 der axialen Länge des Mantels 40 betragen. Der Innendurchmesser der Hülse 42 entspricht praktisch dem Außendurchmesser des Träger 34, wobei zweckmäßigerweise ein geringes Spiel zwischen Träger und Hülse vorgesehen ist. Am in Figur 3 unteren Ende des Träger 34 ist mittels einer Schraube 46 eine Anschlagscheibe 44 angeschraubt. Zwischen der Anschlagscheibe 44 und der Schulter 64 ist eine Schraubendruckfeder 48 eingebaut, welche den Träger 34 relativ zur Hülse 42 und damit relativ zur Lagerbüchse 30 nach unten zu ziehen sucht.

Der Träger 34 und damit der zugehörige Rahmen 32 werden somit durch die Feder 48 ständig (mittels des Querstiftes 52) gegen den Abdeckring 62 und damit gegen die Lagerbüchse 30 angedrückt. Wenn nun der Rahmen 32 um die vertikale Achse der Lagerbüchse 30 verdreht werden soll, muß der Rahmen gegen die Kraft der Feder 48 etwas angehoben werden bis der Querstift 52 die Einkerbung 54 verlassen hat, worauf der Rahmen und der Träger 34 gedreht und gegebenenfalls der Querstift 52 in zwei andere Einkerbungen 54 eingerastet werden kann, die in einem Winkel von z.B. 90° zu den in den Figuren 3 und 4 dargestellten Einkerbungen 54 verlaufen.

Bei der Ausführungsform nach den Figuren 5 und 6 ist der Träger 34 oberhalb seines unteren Endes mit einem Bund 56 versehen, der z.B. mittels eines Querstiftes 60 oder einer Schraube im unteren Bereich des Trägers 34, der einen Lagerzapfen bildet, fest angebracht ist. Der Bund 56 hat zwei diametral gegenüberliegende axial gerichtete Nasen 58, die in entsprechend geformte Einkerbungen 54 axial einrasten können. Auch hier sind wenigstens zwei oder mehrere Paare von Einkerbungen 54 vorgesehen, die in Winkelabständen von z.B. 90° in Umfangsrichtung versetzt sind. In dieser Ausführungsform sind die Einkerbungen 54 direkt in der oberen Stirnfläche des Gehäuses oder Mantels 40 der Lagerbüchse 30 ausgebildet, das heiß ein Abdeckring wie der Abdeckring 62 bei der Ausführungsform nach Figuren 3 und 4 ist bei der Ausführungsform nach Figuren 5 und 6 nicht vorgesehen. Um bei der Ausführungsform nach den Figuren 5 und 6 den Rahmen 32 verdrehen zu können, wird dieser und mit ihm der Träger 34 angehoben, bis die Nasen 58 die Einkerbungen 54 verlassen haben, worauf der Rahmen und der Träger gedreht werden und die Nasen 58 in ein anderes paar Einkerbungen 54 eingerastet werden. Die Lagerbüchse 30 kann aus Metall oder aus Kunststoff hergestellt sein.

## Patentansprüche

1. Gerätewagen (10) für Reinigungszwecke, bestehend aus einem mit Rädern (36) versehenen Gestell (12), vertikalen mit dem Gestell (12) verbundenen Stützen (16) sowie horizontalen mit den Stützen (16) verbundenen Rahmen (26), in welche Behälter einhängbar sind zur Aufnahme von Reinigungsgeräten,
dadurch gekennzeichnet,
daß die vertikalen Stützen (16) zusammen mit wenigstens einem der Rahmen (26) einteilig ausgebildet sind.

2. Gerätewagen nach Anspruch 1,
dadurch gekennzeichnet,
daß die Stützen (16) und der Rahmen (26) aus einem einzigen Rohr geformt sind.

3. Gerätewagen nach Anspruch 1 oder 2,
dadurch gekennzeichnet,
daß an den Stützen (16) ein weiterer Rahmen (32) um eine vertikale Achse drehbar gehalten ist.

4. Gerätewagen nach Anspruch 3,
dadurch gekennzeichnet,
daß der weitere Rahmen (32) oberhalb des ersten Rahmens (26) angeordnet ist.

5. Gerätewagen nach Anspruch 3 oder 4,
dadurch gekennzeichnet,
daß der Rahmen (32) mit einem im wesentlichen quer zur Rahmenebene verlaufenden Träger (34) versehen ist, der in einer an den Stützen (16) befestigten Lagerbüchse (30) drehbar und vertikal abgestützt gelagert ist.

6. Gerätewagen nach Anspruch 5,
dadurch gekennzeichnet,
daß die Lagerbüchse (30) in ihrer oberen Stirnfläche in Winkelabständen von z.B. 90° mit Einkerbungen (54) versehen ist, in die ein mit dem Träger (34) verbundenes Teil einrastbar und damit in Umfangsrichtung arretierbar ist.

7. Gerätewagen nach Anspruch 6,
dadurch gekennzeichnet,
daß der Träger (34) oberhalb seines unteren Endes mit einem Querstift (52) versehen ist, der in die Einkerbungen (54) einrastbar ist.

8. Gerätewagen nach Anspruch 6,
dadurch gekennzeichnet,
daß der Träger (34) oberhalb seines unteren Endes mit einem Bund (56) versehen ist, der zwei diametral gegenüberliegende axiale Nasen (58) aufweist, die in die Einkerbungen (54) einrastbar sind.

9. Gerätewagen nach Anspruch 5,
dadurch gekennzeichnet,
daß in die Lagerbüchse (30) eine Schraubenfeder (48) eingebaut ist, durch welche der Träger (34) vertikal gegen die Lagerbüchse (30) andrückbar ist.

## Claims

1. A trolley (10) for cleaning equipment consisting of a chassis (12) provided with wheels (36), vertical supports (16) connected to the frame (12) and horizontal frames (26) connected to the supports (16) in which containers for accommodating cleaning equipment can be placed, characterized in that the vertical supports (16) are made in one piece together with at least one of the frames (26).

2. A trolley as claimed in claim 1, characterized in that the supports (16) and the frame (26) are formed from a single tube.

3. A trolley as claimed in claim 1 or 2, characterized in that another frame (32) is mounted on the supports (16) for rotation about a vertical axis.

4. A trolley as claimed in claim 3, characterized in that the other frame (32) is arranged above the first frame (26).

5. A trolley as claimed in claim 3 or 4, characterized in that the frame (32) is provided with a holder (34) which extends substantially transversely of the plane of the frame and which is vertically mounted for rotation in a bearing sleeve (30) fixed to the supports (16).

6. A trolley as claimed in claim 5, characterized in that, in its upper end face, the bearing sleeve (30) is provided at angular intervals of, for example, 90° with indentations (54) in which a part connected to the holder (34) is designed to engage and can thus be locked in the peripheral direction.

7. A trolley as claimed in claim 6, characterized in that, above its lower end, the holder (34) is provided with a transverse pin (52) which is designed to engage in the indentations (54).

8. A trolley as claimed in claim 6, characterized in that, above its lower end, the holder (34) is provided with a collar (56) comprising two diametrically opposite axial projections (58) which are designed to engage in the indentations (54).

9. A trolley as claimed in claim 5, characterized in that a helical spring (48), by which the holder (34) can be pressed vertically against the bearing sleeve (30), is incorporated in the bearing sleeve (30).

## Revendications

1. Chariot d'équipement (10) destiné à des travaux de nettoyage, composé d'un châssis (12) muni de roues (36), de montants (16) verticaux reliés au châssis (12) ainsi que de cadres (26) horizontaux reliés aux montants (16) et dans lesquels on peut accrocher des récipients pour recevoir des appareils de nettoyage, caractérisé en ce que les montants verticaux (16) sont réalisés en une seule pièce au moins avec le cadre (26).

2. Chariot d'équipement selon la revendication 1, caractérisé en ce que les montants (16) et le cadre (26) sont formés à partir d'un seul tube.

3. Chariot d'équipement selon les revendications 1 ou 2, caractérisé en ce que les montants (16) portent un autre cadre (32), de manière rotative autour d'un axe vertical.

4. Chariot d'équipement selon la revendication 3, caractérisé en ce que l'autre cadre (32) se trouve au-dessus du premier cadre (26).

5. Chariot d'équipement selon les revendications 3 ou 4, caractérisé en ce que le cadre (32) est muni d'un support (34) dirigé essentiellement transversalement au plan du cadre, ce support étant soutenu verticalement de manière à pouvoir tourner dans une douille de palier (30) fixée aux montants (16).

6. Chariot d'équipement selon la revendication 5, caractérisé en ce que la surface frontale supérieure de la douille de palier (30) comporte des encoches (54) réparties suivant des intervalles angulaires, par exemple égaux à 90°, et dans lesquelles peut s'accrocher, et ainsi se bloquer dans la direction périphérique, une pièce reliée au support (34).

7. Chariot d'équipement selon la revendication 6, caractérisé en ce que le support (34) est muni d'une broche transversale (52) au-dessus de son extrémité inférieure, cette broche pouvant s'accrocher dans les encoches (54).

8. Chariot d'équipement selon la revendication 6, caractérisé en ce que le support (34) est muni d'une collerette (56) au-dessus de son extrémité inférieure, cette collerette ayant deux becs (58) diamétralement opposés et qui s'accrochent dans des encoches (54).

9. Chariot d'équipement selon la revendication 5, caractérisé par un ressort hélicoïdal (58) placé dans le manchon de palier (30) et qui presse le support (34) verticalement contre la douille de palier (30).
